# EUROPÄISCHE PATENTSCHRIFT

(11) **EP 2 781 248 B1**
(45) Veröffentlichungstag und Bekanntmachung des Hinweises auf die Patenterteilung: **24.07.2019**
(21) Anmeldenummer: 14159177.6
(22) Anmeldetag: 12.03.2014
(51) Int. Cl.: B01D 21/00, B61D 35/00

(54) **Schienenfahrzeug mit einer Aufbereitungsvorrichtung für Grauwasser**
Railway vehicle with a treatment device for waste water
Véhicule sur rails doté d'un dispositif de traitement des eaux grises

(30) Priorität: 22.03.2013 DE 102013205084
(43) Veröffentlichungstag der Anmeldung: 24.09.2014
(73) Patentinhaber: Siemens Mobility GmbH, 81739 München (DE)
(72) Erfinder: Kübeck, Thomas, 47929 Grefrath (DE)

(56) Entgegenhaltungen:
- EP-A1- 2 484 574
- JP-A- 2001 079 594

## Beschreibung

Die Erfindung bezieht sich auf ein Schienenfahrzeug mit einer Vorrichtung zur Aufbereitung von Grauwasser, die einen Grauwasserbehälter aufweist, der mit einem deckelseitigen Zulauf für Grauwasser, einem bodenseitigen Ablauf für aufbereitetes Grauwasser und einem zwischen dem Zulauf für Grauwasser und dem Ablauf für aufbereitetes Grauwasser angeordneten Filter ausgestattet ist.

Ein solches Schienenfahrzeug ist aus der EP 2 484 574 A1 bekannt. Dabei liegt der Filter als Patrone vor, und für den Fall, dass der Filter voll bzw. verstopft ist, wird ein Bypass vorgeschlagen, um eine Spülfunktion aufrechtzuerhalten. Ein Spülbetrieb wird dann unter Verwendung von Frischwasser durchgeführt. Auch die Offenlegungsschrift JP 2001 079594 A offenbart ein Filtersystem zur Aufbereitung von Abwasser.

Allgemein wird Grauwasser, beispielsweise Handwaschwasser in Schienenfahrzeugen üblicher Weise nach der Benutzung auf das Gleis geleitet oder zusammen mit Fäkalien des WC im Fäkalien-Tank gesammelt und geleert. Da Wasser im Schienenfahrzeug einerseits das Fahrzeuggewicht negativ beeinflusst und andererseits regelmäßig nachgefüllt und entleert werden muss, führt dies zu hohen Wartungskosten.

Daher besteht das Bestreben, Grauwasser auf dem Schienenfahrzeug derart aufzubereiten, dass es anstelle von Frischwasser für beispielsweise Spülvorgänge wiederverwendbar ist. Dieser Vorgehensweise entspricht die Lösung nach der oben zitierten Druckschrift.

Im Stand der Technik ist es außerdem bekannt, in dem Grauwasserbehälter eine chemische Behandlung des Wassers vorzunehmen, so dass dieses wiederverwendbar ist. Eine solche Lösung ist beispielsweise in der DE 10 2010 007 115 A1 beschrieben. Beide bekannten Lösungen haben den Nachteil, dass die Aufbereitung des Grauwassers aufwändig ist. So müssen verwendete Filterpatronen regelmäßig ersetzt werden, während eine chemische Behandlung des Grauwassers aufgrund der Verbrauchschemikalien ebenfalls eine regelmäßige Wartung erfordert.

Ausgehend hiervon liegt der Erfindung die Aufgabe zugrunde, das eingangs genannte Schienenfahrzeug derart weiterzuentwickeln, dass eine Aufbereitung von Grauwasser, insbesondere Handwaschwasser, mit geringerem Wartungsaufwand durchführbar ist.

Diese Aufgabe wird bei dem eingangs genannten Schienenfahrzeug dadurch gelöst, dass der Filter von einem Kulissenfilter gebildet ist und der Grauwasserbehälter wenigstens einen Schmutzpartikelauslass in seinem Bodenbereich aufweist.

In dieser Weise erfolgt eine Aufbereitung von Grauwasser bei dem Schienenfahrzeug ohne Einsatz von Verbrauchsmaterialien, wie Chemikalien oder Filterpatronen, so dass der Wartungsaufwand gegenüber dem Stand der Technik vermindert ist.

Ein Boden des Grauwasserbehälters weist fürderhin im Bereich des Ablaufs für aufbereitetes Grauwasser einen erhöhten Abschnitt auf und Kulissen des Kulissenfilters sind auf sich ergebenden Schrägen zwischen dem erhöhten Abschnitt des Bodens des Grauwasserbehälters und tiefer gelegenen Bodenabschnitten des Grauwasserbehälters angeordnet, in denen auch der wenigstens eine Schmutzpartikelauslass angeordnet ist.

Dann ergeben sich im Bereich der Schrägen des Bodens des Grauwasserbehälters schräg übereinander angeordnete Kulissen, die jeweils mit dem angrenzenden Boden des Grauwasserbehälters zum Sammeln von Schmutzpartikeln zusammenwirken.

Die auf den Schrägen angeordneten Kulissen sind dabei derart betätigbar, dass sie aus einer ersten Position, bei der ihre unteren Enden auf dem Boden des Grauwasserbehälters stehen und einer zweiten Position, bei der sie gegenüber der ersten Position angehoben sind, bewegbar sind. Dies hat zur Folge, dass die Kulissen in ihrer angehobenen Position eine Bewegung der Schmutzpartikel in Richtung der tiefer gelegenen Bodenabschnitte und damit zu dem wenigstens einen Schmutzpartikelauslass zulassen. Diese Bewegung kann durch weitere Maßnahmen unterstützt werden.

Die auf den Schrägen angeordneten Kulissen können vorzugsweise mittels Druckluft anhebbar sein. Diese Druckluft kann zusätzlich die Wirkung haben, die Schmutzpartikel in Richtung auf den wenigstens einen Schmutzpartikelauslass zu verbringen.

Dazu ist es von Vorteil, wenn ein Deckelabschnitt des Grauwasserbehälters, der flexibel mit einem umgebenden Bereich des Deckels des Grauwasserbehälters verbunden ist, einen Druckluftanschluss aufweist und die auf den Schrägen angeordneten Kulissen derart mit dem Abschnitt des Deckels des Grauwasserbehälters verbunden sind, dass sie bei Beaufschlagung des Inneren des Grauwasserbehälters mit Druckluft einer Hebebewegung des Deckelabschnitts folgen. Bei dieser Ausführungsform der Erfindung wird eine mechanische Betätigung der beweglichen Kulissen in einfacher Weise verwirklicht.

Es können von einem Deckel des Grauwasserbehälters ausgehende, feste Kulissen vorgesehen sein, die sich in Richtung auf den Boden des Grauwasserbehälters erstrecken und mit den auf den Schrägen des Bodens des Grauwasserbehälters vorgesehenen beweglichen Kulissen zusammenwirken. Dabei können insbesondere einander zugewandte Enden einer festen und einer beweglichen Kulisse miteinander überlappen, so dass eine wirksame Barriere für Schmutzpartikel geschaffen wird.

Der Grauwasserbehälter kann einen deckelseitigen Zulauf für Frischwasser aufweisen und in seinem inneren mit einem Füllstandssensor ausgestattet sein. Diese Ausführungsform betrifft in erster Linie den Fall, bei dem im Grauwasserbehälter zu wenig Flüssigkeit enthalten ist, um einen nachfolgenden Spülvorgang durchzuführen. In diesem Fall wird über den Füllstandssensor der unzureichende Flüssigkeitspegel erfasst und in einem solchen Maß Frischwasser zugeführt, dass ein nachfolgender Spülvorgang erfolgen kann.

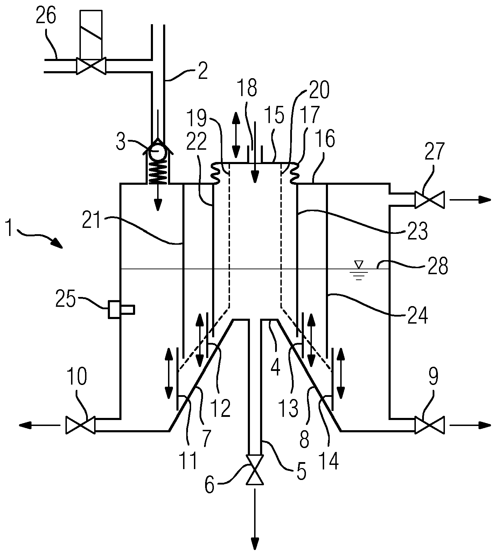

Ein Ausführungsbeispiel der Erfindung wird nachfolgend unter Bezugnahme auf die Zeichnung noch näher erläutert. Die einzige Figur zeigt eine schematische Ansicht eines Grauwasserbehälters zum Einsatz bei einem Schienenfahrzeug.

Die Figur zeigt einen allgemein zylindersymmetrischen Grauwasserbehälter 1, der einen deckelseitigen Zulauf 2 für Grauwasser aufweist, das über ein Ventil 3 in den Grauwasserbehälter 1 gelangt.

Der Grauwasserbehälter 1 hat einen Boden mit einem zentralen, erhöhten Abschnitt 4, von dem ein Ablauf 5 für aufbereitetes Grauwasser ausgeht, der ebenfalls mit einem Ventil 6 ausgestattet ist.

Zu beiden Seiten des erhöhten Abschnitts 4 des Grauwasserbodens schließen sich schräge Bodenabschnitte 7, 8 an. Vom jeweiligen Fuß der Schrägen 7, 8 aus verläuft der Boden des Grauwasserbehälters horizontal nach außen und der Grauwasserbehälter 1 zeigt an beiden unteren Ecken jeweils einen Schmutzpartikelauslass 9, 10.

Im Bereich der Schrägen 7, 8 sind vertikal ausgerichtete, bewegliche Kulissen 11, 12, 13, 14 angeordnet, im dargestellten Ausführungsbeispiel jeweils zwei zu jeder Seite des erhöhten Abschnitts 4. In anderen Ausführungsformen ist es möglich, dass die Anzahl der Kulissen für eine höhere Filterqualität größer ist.

Da der Zulauf für Grauwasser 2 derart am Rand des Grauwasserbehälters 1 angeordnet ist, dass einströmendes Grauwasser jenseits der äußersten Kulisse 11, 8 auf den Boden des Grauwasserbehälters 1 trifft, steigt mit weiter zulaufendem Grauwasser ein Flüssigkeitsspiegel 15 so lange an, bis ein oberes Ende der äußersten Kulisse 11 erreicht ist, wonach das dann bereits teilweise aufbereitete Grauwasser weiter in Richtung auf den Ablauf 5 für aufbereitetes Grauwasser gelangt. Etwaige Schmutzpartikel, wie Schwebeteilchen, verbleiben bei der äußersten Filterstufe auf einer Außenseite der äußersten Kulisse 11, 8.

Mit weiter zunehmenden Füllstand des Grauwasserbehälters 1 wird das obere Ende der inneren Kulissen 12, 13 erreicht, wobei sich wiederum Schmutzpartikel in dem Zwischenraum zwischen den äußersten Kulissen 11, 8 und den inneren Kulissen 12, 13 sammeln.

Die Kulissen 11, 12, 13, 14, sind vertikal beweglich und stehen in ihrem Grundzustand auf dem Boden des Grauwasserbehälters 1 auf. Ihre Betätigung erfolgt mittels Druckluft. Dazu ist ein Deckelabschnitt 15 des Grauwasserbehälters 1 flexibel mit einem festen, umgebenden Bereich 16 des Deckels des Grauwasserbehälters 1 verbunden, und zwar über eine flexible Membran 17.

Der Deckelabschnitt 15 ist mit einem Druckluftanschluss 18 ausgestattet und der Grauwasserbehälter 1 ist bei geschlossenen Ventilen 3, 6, 9, 10 in dem Maße druckdicht, dass eine Beaufschlagung des Grauwasserbehälters 1 mit Druckluft ein Anheben des Deckelabschnitts 15 bewirkt.

An dem Deckelabschnitt 15 sind auf einer Innenseite des Grauwasserbehälters 1 Betätigungselemente 19, 20 angebracht, die zunächst vertikal in Richtung auf den Boden des Grauwasserbehälters 1 und dann im Wesentlichen parallel zu den Schrägen 7, 8 verlaufen sowie mechanisch mit den beweglichen Kulissen 11, 12, 13, 14 verbunden sind. Damit bewirkt ein Anheben des Deckelabschnitts 15 durch einströmende Druckluft, dass auch die Kulissen 11, 12, 13, 14 angehoben werden, so dass sich Schmutzpartikel die Schrägen 7, 8 entlang nach unten in Richtung auf die Schmutzpartikelauslässe 9, 10 bewegen können. Wenn nun die Schmutzpartikelauslässe 9, 10 geöffnet, jedoch das Ventil 6 und das Ventil 3 geschlossen sind, bewirkt die Druckluft eine Entleerung des Grauwasserbehälters 1 über die Schmutzpartikelauslässe 9, 10, wodurch neben Grauwasser ebenfalls gefilterte Schmutzpartikel abgeführt werden.

Zur Unterstützung der Filterwirkung des Kulissenfilters wirken die vertikal beweglichen Kulissen 11, 12, 13, 14 zusammen mit zugeordneten, festen Kulissen 21, 22, 23, 24, die von dem Deckelabschnitt 16 vertikal nach unten in den Grauwasserbehälter 1 hinein verlaufen, wobei ihre unteren Enden mit den oberen Enden der beweglichen Kulissen 11, 12, 13, 14 überlappen und jeweils auf deren Innenseite liegen.

Für den Fall, dass der Grauwasserbehälter 1 für einen weiteren Spülvorgang keine ausreichende Menge an aufbereitetem Grauwasser enthält, ist der Grauwasserbehälter 1 mit einem Füllstandssensor 25 ausgestattet, der ein Unterschreiten eines vorgegebenen Füllstandswerts für einen Spülvorgang erfasst. Für einen nachfolgenden Spülvorgang fehlendes Wasser wird bereitgestellt über einen Zulauf 26 für Frischwasser, der im dargestellten Ausführungsbeispiel unmittelbar an den deckelseitigen Zulauf 2 für Grauwasser angeschlossen ist und über ein gemeinsames Leitungsstück mit dem Ventil 3 verbunden ist.

Außerdem ist der Grauwasserbehälter 1 deckelseitig mit einem Überlaufventil 27 ausgestattet.

## Patentansprüche

1. Schienenfahrzeug mit einer Vorrichtung zur Aufbereitung von Grauwasser, die einen Grauwasserbehälter (1) aufweist, der mit einem deckelseitigen Zulauf (2) für Grauwasser, einem bodenseitigen Ablauf (5) für aufbereitetes Grauwasser und einem zwischen dem Zulauf (2) für Grauwasser und dem Ablauf (5) für aufbereitetes Grauwasser angeordneten Filter ausgestattet ist,
**dadurch gekennzeichnet, dass**
der Filter von einem Kulissenfilter gebildet ist und der Grauwasserbehälter (1) wenigstens einen Schmutzpartikelauslass (9, 10) in seinem Bodenbereich aufweist, wobei ein Boden des Grauwasserbehälters (1) im Bereich des Ablaufs (5) für aufbereitetes Grauwasser einen erhöhten Abschnitt (4) aufweist und Kulissen (11 - 14) des Kulissenfilters auf sich ergebenden Schrägen (7, 8) zwischen dem erhöhten Abschnitt (4) des Bodens des Grauwasserbehälters (1) und tiefer gelegenen Bodenabschnitten des Grauwasserbehälters (1) angeordnet sind, in denen auch der wenigstens eine Schmutzpartikelauslass (9, 10) angeordnet ist, wobei die auf den Schrägen (7, 8) angeordneten Kulissen (11 - 14) derart betätigbar sind, dass sie aus einer ersten Position, bei der ihre unteren Enden auf dem Boden des Grauwasserbehälters (1) stehen und einer zweiten Position, bei der sie gegenüber der ersten Position angehoben sind, bewegbar sind.

2. Schienenfahrzeug nach Anspruch 1,
**dadurch gekennzeichnet, dass**
die auf den Schrägen (7, 8) angeordneten Kulissen (11 - 14) mittels Druckluft anhebbar sind.

3. Schienenfahrzeug nach Anspruch 2,
**dadurch gekennzeichnet, dass**
ein Deckelabschnitt (15) des Grauwasserbehälters (1), der flexibel mit einem umgebenden Bereich (16) des Deckels des Grauwasserbehälters (1) verbunden ist, einen Druckluftanschluss (18) aufweist und die auf den Schrägen (7, 8) angeordneten Kulissen (11 - 14) derart mit dem Deckelabschnitt (15) des Grauwasserbehälters (1) verbunden sind, dass sie bei Beaufschlagung des Inneren des Grauwasserbehälters (1) mit Druckluft einer Hebebewegung des Deckelabschnitts (15) folgen.

4. Schienenfahrzeug nach einem der Ansprüche 1 bis 3,
**dadurch gekennzeichnet, dass**
von einem festen Bereich (16) des Deckels des Grauwasserbehälters (1) ausgehende, feste Kulissen (21 - 24) vorgesehen sind, die sich in Richtung auf den Boden des Grauwasserbehälters (1) erstrecken und mit den auf den Schrägen (7, 8) des Bodens des Grauwasserbehälters (1) vorgesehenen beweglichen Kulissen (11 - 14) zusammenwirken.

5. Schienenfahrzeug nach einem der Ansprüche 1 bis 4,
**dadurch gekennzeichnet, dass**
der Grauwasserbehälter (1) einen deckelseitigen Zulauf (26) für Frischwasser aufweist und in seinem Inneren mit einem Füllstandssensor (25) ausgestattet ist.

## Claims

1. Rail vehicle having a device for treating grey water, said device having a grey water container (1) which is provided with a cover-side inlet (2) for grey water, a base-side drain (5) for treated grey water and a filter which is arranged between the inlet (2) for grey water and the drain (5) for treated grey water,
**characterized in that**
the filter is formed by a slotted filter and the grey water container (1) has at least one dirt particle outlet (9, 10) in its base region, wherein a base of the grey water container (1) has a raised portion (4) in the region of the drain (5) for treated grey water, and slots (11 - 14) of the slotted filter are arranged on resulting slopes (7, 8) between the raised portion (4) of the base of the grey water container (1) and lower base portions of the grey water container (1), in which the at least one dirt particle outlet (9, 10) is also arranged, wherein the slots (11 - 14) arranged on the slopes (7, 8) are actuable in such a manner that they are movable from a first position, in which their lower ends stand on the base of the grey water container (1), and a second position, in which they are raised in relation to the first position.

2. Rail vehicle according to Claim 1,
**characterized in that**
the slots (11 - 14) arranged on the slopes (7, 8) can be raised by means of compressed air.

3. Rail vehicle according to Claim 2,
**characterized in that**
a cover portion (15) of the grey water container (1), which cover portion is flexibly connected to a surrounding region (16) of the cover of the grey water container (1), has a compressed air connection (18), and the slots (11 - 14) arranged on the slopes (7, 8) are connected to the cover portion (15) of the grey water container (1) in such a manner that, upon the interior of the grey water container (1) being charged with compressed air, said slots follow a lifting movement of the cover portion (15).

4. Rail vehicle according to one of Claims 1 to 3,
**characterized in that**
fixed slots (21 - 24) emerging from a fixed region (16) of the cover of the grey water container (1) are provided, said fixed slots extending in the direction of the base of the grey water container (1) and interacting with the movable slots (11 - 14) provided on the slopes (7, 8) of the base of the grey water container (1).

5. Rail vehicle according to one of Claims 1 to 4,
**characterized in that**
the grey water container (1) has a cover-side inlet (26) for fresh water and is equipped with a filling level sensor (25) in its interior.

## Revendications

1. Véhicule ferroviaire, comprenant un dispositif de traitement des eaux grises, qui a un récipient (1) à eau grise, équipé d'une arrivée (2) d'eau grise du côté du couvercle, une évacuation (5) d'eau grise traitée du côté du fond et un filtre monté entre l'arrivée (2) d'eau grise et l'évacuation (5) d'eau grise traitée,
**caractérisé en ce que**
le filtre est formé d'un filtre à coulisse et le récipient (1) à eau grise a, dans sa partie de fond, au moins une sortie (9, 10) de particules de saleté, un fond du récipient (1) à eau grise ayant, dans la partie de l'évacuation (5) d'eau grise traitée, une partie (4) surélevée et des coulisses (11 à 14) du filtre à coulisse étant disposées sur des parties (7, 8) inclinées qui s'ensuivent, entre la partie (1) surélevée du fond du récipient (1) à eau grise et des parties de fond plus basses du récipient (1) à eau grise, dans lesquelles la au moins une sortie (9, 10) de particules de saleté est aussi disposée, dans lequel les coulisses (11 à 14), disposées sur les parties (7, 8) inclinées, peuvent être actionnées de manière à pouvoir être déplacées d'une première position dans laquelle leurs extrémités inférieures sont sur le fond du récipient (1) à eau grise à une deuxième position dans laquelle elles sont soulevées par rapport à la première position.

2. Véhicule ferroviaire suivant la revendication (1),
**caractérisé en ce que**
les coulisses (11 à 14), disposées sur les parties (7, 8) inclinées, peuvent être soulevées au moyen d'air comprimé.

3. Véhicule ferroviaire suivant la revendication 2,
**caractérisé en ce qu'**
une partie (15) de couvercle du récipient (1) à eau grise, qui est reliée d'une manière souple à une partie (16) à l'entour du couvercle du récipient (1) à eau grise, a un raccord (18) pour de l'air comprimé et les coulisses (11 à 14), disposées sur les parties (7, 8) inclinées, sont reliées à la partie (15) de couvercle du récipient (1) à eau grise, de manière à ce que, lorsque l'intérieur du récipient (1) à eau grise est alimenté en air comprimé, elles suivent un déplacement de soulèvement de la partie (15) de couvercle.

4. Véhicule ferroviaire suivant l'une des revendications 1 à 3,
**caractérisé en ce qu'**
il est prévu des coulisses (21 à 24) fixes, qui partent d'une partie (16) fixe du couvercle du récipient (1) à eau grise, qui s'étendent en direction du fond du récipient (1) à eau grise et avec lesquelles coopèrent des coulisses (11 à 14) mobiles prévues sur les parties (7, 8) inclinées du fond du récipient (1) à eau grise.

5. Véhicule ferroviaire suivant l'une des revendications 1 à 4,
**caractérisé en ce que**
le récipient (1) à eau grise a une arrivée (26) d'eau fraîche du côté du couvercle et est équipé à l'intérieur d'un détecteur (25) de niveau.
